Europäisches Patentamt

European Patent Office

Office européen des brevets

(11) Publication number: **0 341 095**
**A2**

# (12) EUROPEAN PATENT APPLICATION

(21) Application number: **89304640.9**

(22) Date of filing: **08.05.89**

(51) Int. Cl.4: **G 01 N 21/62**
**G 01 N 21/65, G 01 S 17/06**

(30) Priority: 06.05.88 GB 8810723
05.07.88 GB 8815941
09.11.88 GB 8826225
23.03.89 GB 8906853

(43) Date of publication of application:
08.11.89 Bulletin 89/45

(84) Designated Contracting States: **BE DE NL**

(71) Applicant: **GERSAN ESTABLISHMENT**
Staedtle 36
FL-9490, Vaduz (LI)

(72) Inventor: **Smith, Martin Phillip**
18 Hamilton Road
Wargrave Berkshire RG10 8BB (GB)

Smith, Robin Wyncliffe
79 Outram Road
Croydon Surrey CR0 6XJ (GB)

Cooper, Martin
37 Terrington
Marlow Buckinghamshire SL7 2RE (GB)

Welbourn, Christopher Mark
Oswald London Road
Sunningdale Berkshire RG6 3ED (GB)

Spear, Paul Martin
3 Bottisham Close Lower Early
Reading Berkshire RG6 4ED (GB)

(74) Representative: **Lyndon-Stanford, Edward Willoughby Brooke et al**
MARKS & CLERK 57/60 Lincoln's Inn Fields
London WC2A 3LS (GB)

(54) Identifying the position of objects or zones.

(57) In order to identify diamonds in gangue, incident laser radiation is scanned along an extended line across particulate gangue, and the diamonds 2 are identified by detecting the Raman radiation which is emitted, using a narrow pass band filter 9 in order to block out other radiation. In order to identify the position along the scan line from which the Raman radiation was emitted, the incident laser radiation is pulsed at a pulse frequency which changes along the scan line, and the frequency of the Raman radiation detected is sensed. In this way, one can simplify the equipment needed.

**Description**

## IDENTIFYING THE POSITION OF OBJECTS OR ZONES

Background of the Invention

Our Patent Application EP 89 304 642 discloses a method of indicating or identifying specific discrete objects or specific zones of an article by project ing exciting radiation to strike the objects or article along an extended line; the Raman emission is sensed, though any suitable emission can be sensed; primarily, the method is directed towards sorting diamonds from gangue, though the method can be used in any suitable operation, as discussed in said Patent Application.

One problem is to identify the position in the scan line from which the emitted radiation is sensed or detected. It would be possible to use a large number of side-by-side sensors, but this is expensive. Other methods are disclosed in said Patent Application.

The Invention

The invention provides methods as set forth in Claims 1, 5 or 11 and apparatus as set forth in Claims 6, 10 or 12. The remaining Claims set forth optional features of the invention.

The method of the invention is broadly usable wherever information is required from a response to an exciting stimulus, particularly if the response is radiation-emitting (e.g. optical); the invention is particularly useful when positional information is required.

In the preferred embodiment, the incident radiation is modulated, and the modulation is changed along the line, the frequency of response being identified. This enables the position of the article or zone emitting the significant radiation to be identified using a single sensor or detector; however, it is possible to use a number of side-by-side detectors, each detector responding to a certain length of the line. The invention can simplify the electronics - time division multiplexing can be used.

The method can be used with any suitable emitted radiation e.g. ultra-violet, laser or X-ray; however, the modulation frequency must be compatible with the rise/decay time or life time (luminescence reaction time) of the emitted radiation. Thus stones such as diamonds and zircons can be sorted from gangue using general luminescence, which has a relatively long life time, or diamonds alone can be sorted from gangue using Raman luminescence, which has a very short life time.

The incident radiation can be provided by a single source (e.g. a laser with a rotating polygonal mirror to provide a scan), and the modulation frequency can be ramped up or down from end to end of the line (the frequency being changed in time and space). Alternatively, a number of sources can be used, each irradiating a short length of the line, e.g. laser diodes operating at different pulse frequencies (the frequency being changed in space alone). Different responses from the same location could be identified if the frequency changes in time alone.

Preferred Embodiment

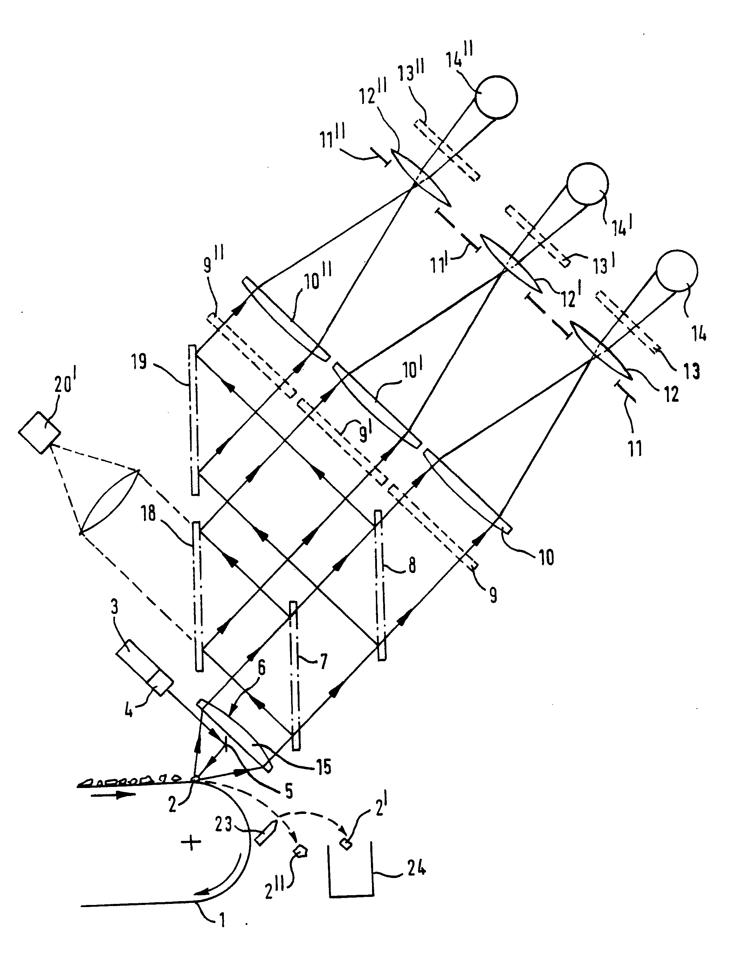

The invention will be further described, by way of example, with reference to the accompanying drawing, which reproduces Figure 3 of said Patent Application with, however, the "further sensing means" 20 omitted.

In Figure 3 of said Patent Application, the photomultiplier tube (PMT) 14 gives a signal when there is a diamond 2 along the line being scanned, and the further sensing means 20 indicates where along the line the diamond 2 is situated, so that the diamond can be ejected into the correct sort bin 24. With the omission of the further sensing means 20, the present invention is used to determine where along the scan line the diamond 2 is situated.

In the embodiment shown in Figure 3 of said Patent Application, the scan line is scanned by a single laser 3, but the laser 3 of the present invention is pulsed with a pulse frequency which is varied in some way across the scan; for instance it can be ramped from 1 MHz to 2 GHz from one end of the scan line to the other. When a diamond 2 is detected, a modulation burst is superimposed on the signal on the main PMT 14, due to the emission of Raman luminescense from the diamond 2. The frequency of response of the main PMT 14 corresponds to the position in the scan line from which the Raman luminescence is emitted. The frequency of response can be determined by a microprocessor which includes suitable electronics to demodulate the PMT signal and compare it with positional signals indicating the position of the source of the emitted signal, i.e. of the diamond 2. Heterodyne detection can be used. The output of the microprocessor (indicated as 39 in Figure 7 of said Patent Application) triggers the appropriate jet 23 at the correct moment to blow the diamond 2 into the bin 24.

Anything discussed in said Patent Application can be incorporated in the present invention, provided it is suitable. Said Patent Application gives many details which are applicable to the present invention.

The present invention has been described above purely by way of example, and modifications can be made within the spirit of the invention.

**Claims**

1. A method of obtaining information from a modulated exciting stimulus, comprising changing the frequency of modulation of the stimulus, sensing the response, and detecting the frequency of the response in order to obtain information.

2. The method of Claim 1, wherein the modulation frequency is changed in space.

3. The method of Claim 1 or 2, wherein the modulation frequency is changed in time.

4. The method of any of the preceding Claims, wherein the exciting stimulus is provided along an extended line, and the position in the line is determined from the frequency of the response.

5. A method of identifying objects or zones of an article, comprising:

projecting modulated incident radiation to strike the objects or zones along an extended line, which radiation will cause radiation to be emitted by the objects or zones to be identified, the modulation frequency of the incident radiation changing along the line;

sensing the emitted radiation; and

using the frequency of the emitted radiation to identify the position from which the radiation has been emitted.

6. Apparatus for obtaining information from a response to an exciting modulated stimulus, comprising means for providing the stimulus with a modulation frequency which changes, means for sensing the response, and means for detecting the frequency of the response.

7. The apparatus of Claim 6, wherein the stimulus changes in space.

8. The apparatus of Claim 6 or 7, wherein the stimulus changes in time.

9. The apparatus of any of Claims 6 to 8, wherein the stimulus is provided along an extended line, the apparatus comprising means for determing where on the line the response is given in accordance with the frequency of the response.

10. Apparatus for identifying objects or zones of an article for use with means for projecting modulated incident radiation to strike the objects or zones along an extended line, which radiation will cause radiation to be emitted by the objects or zones to be identified, and which incident radiation has a modulation frequency which changes along the line, the apparatus comprising:

means for sensing the radiation emitted by the objects or zones; and

means for association with the projecting means for sensing the frequency of the emitted radiation, and thereby identifying the position along said line from which the radiation has been emitted.

11. A method of identifying objects or zones of an article, substantially as herein described with reference to the accompanying drawing.

12. Apparatus for identifying objects or zones of an article, for use in association with projecting means for projecting incident radiation to strike the objects or zones along an extended line, the apparatus being substantially as herein described in with reference to the accompanying drawing.

13. The apparatus of Claim 10 or 12, and further comprising means for projecting modulated incident radiation to strike the objects or zones along an extended line, and for causing radiation to be emitted by the objects or zones, the projecting means being arranged such that the modulation frequency of the incident radiation changes along said line.